# EUROPEAN PATENT APPLICATION

(11) **EP 4 803 483 A1**
(43) Date of publication of application: **09.09.2026**
(21) Application number: 26158692.9
(22) Date of filing: 16.02.2026
(51) Int. Cl.: C01B 32/158, C01B 32/174, H01M 4/139, H01M 4/62

(54) **CARBON NANOTUBE, CONDUCTIVE MATERIAL DISPERSION INCLUDING THE SAME, AND METHOD FOR MANUFACTURING AN ELECTRODE FOR A RECHARGEABLE LITHIUM BATTERY USING THE SAME**

(30) Priority: 05.03.2025 KR 20250028168
(71) Applicant: SAMSUNG SDI CO., LTD., Yongin-si, Gyeonggi-do 17084 (KR)
(72) Inventor: SEOL, Jongheon, 17084 Yongin-si, Gyeonggi-do (KR); SONG, Seowon, 17084 Yongin-si, Gyeonggi-do (KR); KIM, Minsu, 17084 Yongin-si, Gyeonggi-do (KR); KIM, Minjae, 17084 Yongin-si, Gyeonggi-do (KR); PARK, Seonjoo, 17084 Yongin-si, Gyeonggi-do (KR)
(74) Representative: Michalski Hüttermann & Partner mbB

(57) **Abstract**

The present disclosure relates to a carbon nanotube, a conductive material dispersion including the carbon nanotube, and a method for manufacturing an electrode for a rechargeable lithium battery using the carbon nanotube. The carbon nanotube has a mesopore diameter distribution in the range of about 1.7 nm to about 300 nm as measured by a Barrett-Joyner-Halenda (BJH) method. A peak top mesopore diameter A in the distribution satisfies 30 nm ≤ A ≤ 40 nm, a full width at half maximum (FWHM) of the distribution is in the range of about 40 nm to about 55 nm; and a specific surface area of about 500 m²/g or less as measured by a Brunauer-Emmett-Teller (BET) method.

## Description

### CROSS-REFERENCE TO RELATED APPLICATION

This application claims priority to Korean Patent Application No. 10-2025-0028168 filed on March 5, 2025 in the Korean Intellectual Property Office.

### BACKGROUND

The present disclosure relates to a carbon nanotube, a conductive material dispersion including the carbon nanotube, and a method for manufacturing an electrode for a rechargeable lithium battery using the carbon nanotube.

With increasing presence of battery-powered electronic devices such as, e.g., mobile phones, notebook computers, electric vehicles, and the like, the demand for a rechargeable battery with high energy density and large capacity is increasing. Accordingly, enhancing the performance of the rechargeable lithium battery may be advantageous.

The rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

### SUMMARY

Some example embodiments of the present disclosure include a carbon nanotube having desired or improved electrical characteristics in the electrode.

Some example embodiments of the present disclosure include an electrode having an improved lifetime by including the carbon nanotube which data values measured by the BJH method satisfy a desired criteria, and the rechargeable lithium battery including the carbon nanotube.

A carbon nanotube according to an example embodiment of the present disclosure may have a mesopore diameter distribution in the range of about 1.7 nm to about 300 nm as measured by a Barrett-Joyner-Halenda (BJH) method, wherein a peak top mesopore diameter A in the distribution satisfies 30 nm ≤ A ≤ 40 nm; a full width at half maximum (FWHM) of the distribution in the range of about 40 nm to about 55 nm; and a specific surface area of about 500 m²/g or less as measured by a Brunauer-Emmett-Teller (BET) method. A mesopore volume of the carbon nanotube measured by the BJH method may be in a range of about 1.6 cm³/g to about 3.0 cm³/g. The specific surface area of the carbon nanotube may be in a range of about 180 m²/g to about 290 m²/g.

A conductive material dispersion for a rechargeable lithium battery according to another example embodiment of the present disclosure may include the carbon nanotube; a dispersant; and a solvent.

A method for manufacturing an electrode for a rechargeable lithium battery according to another example embodiment of the present disclosure may include preparing a carbon nanotube; mixing the carbon nanotube, an electrode active material, and a binder to manufacture an electrode slurry; and coating the electrode slurry on an electrode current collector to form an electrode including an electrode active material layer formed on the electrode current collector. The carbon nanotube may have a mesopore diameter distribution in the range of about 1.7 nm to about 300 nm as measured by a Barrett-Joyner-Halenda (BJH) method, wherein a peak top mesopore diameter A in the distribution satisfies 30 nm ≤ A ≤ 40 nm; a full width at half maximum (FWHM) of the distribution in the range of about 40 nm to about 55 nm; and a specific surface area of about 500 m²/g or less as measured by a Brunauer-Emmett-Teller (BET) method. A mesopore volume of the carbon nanotube measured by the BJH method may be in a range of about 1.6 cm³/g to about 3.0 cm³/g. The specific surface area of the carbon nanotube may be in a range of about 180 m²/g to about 290 m²/g.

### BRIEF DESCRIPTION OF DRAWINGS

FIG. 1 illustrates a simplified conceptual diagram showing a rechargeable lithium battery according to example embodiments of the present disclosure.
FIGS. 2 to 5 illustrate simplified diagrams showing a rechargeable lithium battery according to an example embodiment, in which FIG. 2 is a cylindrical battery, FIG. 3 is an angular battery, and FIGS. 4 and 5 are pouch-type batteries.
FIG. 6 is a flowchart illustrating a method for manufacturing an electrode for a rechargeable lithium battery according to example embodiments of the present disclosure.
FIG. 7 is a diagram illustrating an example method for measuring powder resistance of a powder.
FIG. 8 is a diagram illustrating methods for measuring a specific surface area and a mesopore diameter distribution of a carbon nanotube.
FIG. 9 shows a graph of the mesopore diameter distribution measured by the BJH method.
FIG. 10 is a graph showing the mesopore diameter distribution of carbon nanotubes according to Examples and Comparative Examples measured by the BJH method.

### DETAILED DESCRIPTION

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description explain various example embodiments and are not intended to limit the present disclosure.

Unless explicitly stated otherwise, singular forms may also include plural forms. As used herein, the phrases "A or B," "at least one of A and B," "at least one of A or B," "A, B, or C," "at least one of A, B, and C," and "at least one of A, B, or C" include any one or all possible combinations of the listed elements. in this description, the phrase "combination thereof" may refer to a mixture, a stack, a composite, a copolymer, an alloy, a blend, or a reaction product. The terms "comprises/includes" and "comprising/including" do not exclude the presence or addition of one or more other components.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

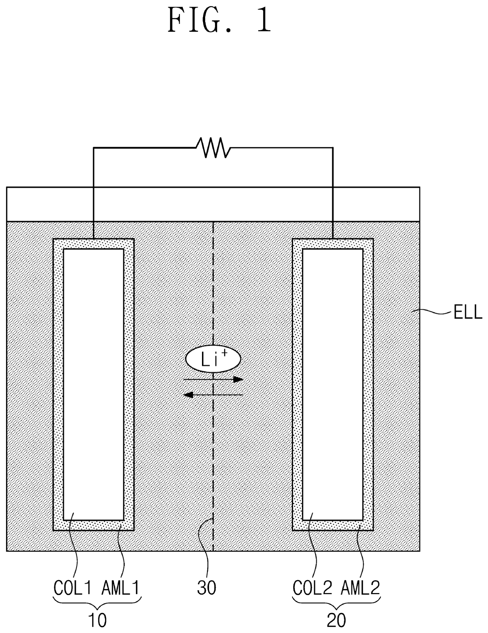

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium through which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1, and a positive electrode active material layer AML1 formed on the current collector COL1. The positive electrode active material layer AML1 may include a positive electrode active material, and may further include a binder and/or a conductive material.

For example, the positive electrode 10 may further include an additive that can constitute a sacrificial positive electrode.

An amount of the positive electrode active material may be in a range of about 90 wt% to about 99.5 wt% relative to 100 wt% of the positive electrode active material layer AML1. An amount of each of the binder and the conductive material may be in a range of about 0.5 wt% to about 5 wt% relative to 100 wt% of the positive electrode active material layer AML1.

The binder may improve attachment of positive electrode active material particles to each other, and improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause a chemical change in a battery may be used as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be used as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, or a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90 ≤ a ≤ 1.8, 0 ≤ b ≤ 0.5, and 0 ≤ c ≤ 0.05); LiₐMn_{2-b}X_{b}O_{4-c}D_{c} (where 0.90≤a≤1.8, 0≤b≤0.5, and 0 ≤ c ≤ 0.05); LiₐNi_{1-b-c}Co_{b}X_{c}O_{2-α}D_{α} (where 0.90≤a≤1.8, 0≤b≤0.5, 0 ≤ c ≤ 0.5, and 0<α<2); LiₐNi_{1-b-c}Mn_{b}X_{c}O_{2-α}D_{α} (where 0.90 ≤ a ≤ 1.8, 0 ≤ b ≤ 0.5, 0 ≤ c ≤ 0.5, and 0<α<2); LiₐNi_{b}Co_{c}L¹_{d}GₑO₂ (where 0.90 ≤ a ≤ 1.8, 0 ≤ b ≤ 0.9, 0 ≤ c ≤ 0.5, 0 ≤ d ≤ 0.5, and 0 ≤ e ≤ 0.1); LiₐNiG_{b}O₂ (where 0.90 ≤ a ≤ 1.8 and 0.001 ≤ b ≤ 0.1); LiₐCoG_{b}O₂ (where 0.90 ≤ a ≤1.8 and 0.001 ≤ b ≤ 0.1); LiₐMn_{1-b}G_{b}O₂ (where 0.90 ≤ a ≤ 1.8 and 0.001 ≤ b ≤ 0.1); LiₐMn₂G_{b}O₄ (where 0.90 ≤ a ≤ 1.8 and 0.001 ≤ b ≤ 0.1); LiₐMn_{1-g}G_{g}PO₄ (where 0.90 ≤ a ≤ 1.8 and 0 ≤ g ≤ 0.5); Li_{(3-f)}Fe₂(PO₄)₃ (where 0 ≤ f ≤ 2); LiₐFePO₄ (where 0.90 ≤ a ≤ 1.8).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and L¹ may be or include at least one of Mn, Al, or a combination thereof.

For example, the positive electrode active material may be or include a high-nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material may achieve high capacity, and thus may be applied to a high-capacity and high-density rechargeable lithium battery.

### Negative Electrode 20

The negative electrode 20 for the rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a range of about 90 wt% to about 99 wt%, a binder in a range of about 0.5 wt% to about 5 wt%, and a conductive material in a range of about 0 wt% to about 5 wt%.

The binder may improve attachment of negative electrode active material particles to each other, and may improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, or alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause a chemical change in a battery may be used as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that can reversibly intercalate and deintercalate lithium ions, lithium metal, a lithium metal alloy, a material that can be doped and de-doped with lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, or Sn.

The material that can be doped and de-doped with lithium may include a Si-based negative electrode active material or a Sn-based negative electrode active material. The Si-based negative electrode active material may include at least one of silicon, silicon-carbon composite, SiOₓ (where 0<x≤2), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

### Separator 30

Based on a type of rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate, and a coating layer positioned on one or opposite surfaces of the porous substrate, the coating layer including an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack of a coating layer including the organic material and a coating layer including an inorganic material.

### Electrolyte ELL

The electrolyte ELL for a rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone, or in a mixture of two or more substances.

In addition, when a carbonate-based solvent is used, a cyclic carbonate and a chain carbonate may be mixed, and the cyclic carbonate and the chain carbonate may be mixed in a volume ratio in a range of about 1:1 to about 1:9.

The lithium salt may be or include a material that dissolves in the non-aqueous organic solvent to constitute a supply source of lithium ions in a battery and plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFOP), or lithium bis(oxalato)borate (LiBOB)

### Rechargeable Lithium Battery

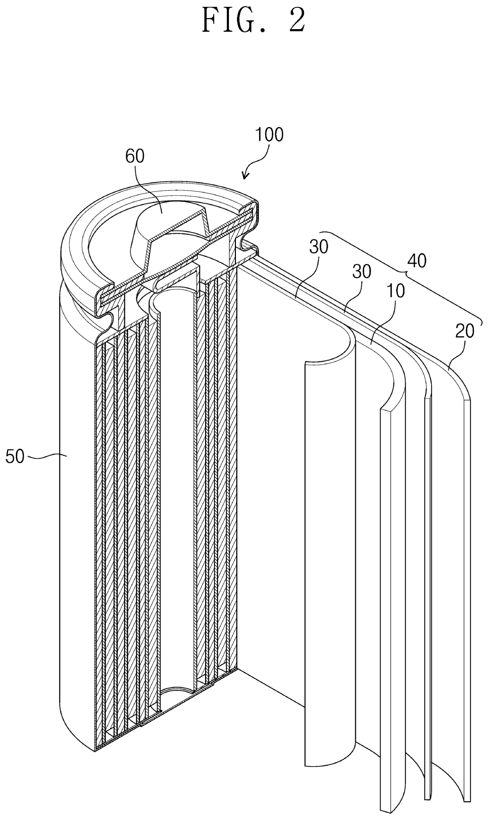

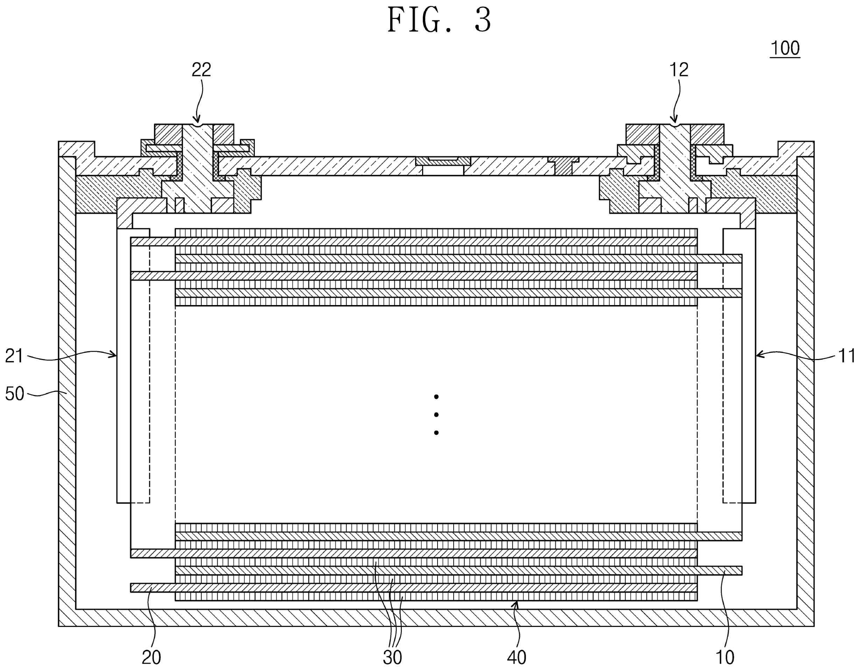

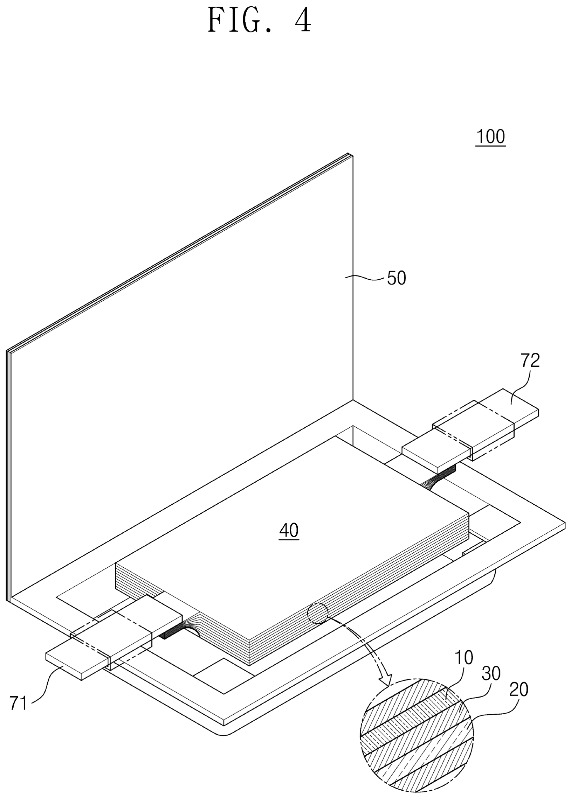

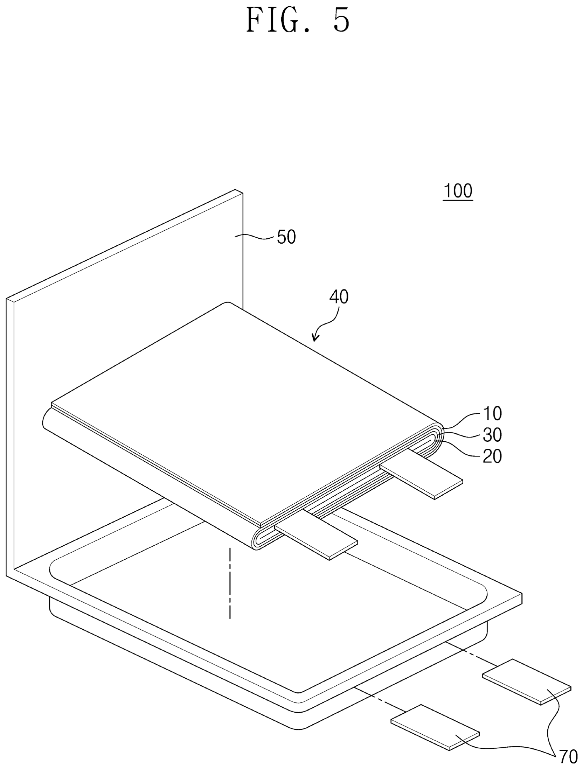

Based on a shape of the rechargeable lithium battery, the rechargeable lithium battery may be classified into cylindrical, prismatic, pouch, and coin types. In FIGS. 2 to 5 illustrating simplified diagrams showing a rechargeable lithium battery according to an example embodiment, FIG. 2 shows a cylindrical battery, FIG. 3 shows a prismatic battery, and FIGS. 4 and 5 show pouch-type batteries. Referring to FIGS. 2 to 4, the rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/71 forming an electrical path for externally inducing a current generated in the electrode assembly 40.

The rechargeable lithium battery according to example embodiments of the present disclosure may include an electrode and an electrolyte layer. The electrolyte layer may include the separator and an electrolytic solution. For example, the entire structure including the separator and the electrolytic solution may be collectively referred to as an "electrolyte layer." The electrolyte layer may be formed as a film having a desired thickness. The electrode may include a positive electrode or a negative electrode.

The electrode may include an electrode current collector and an electrode active material layer manufactured using an electrode slurry for the rechargeable lithium battery. For example, the electrode active material layer may be formed by coating the electrode slurry on the electrode current collector. For example, the electrode active material layer may be formed by applying the electrode slurry onto the electrode current collector, and then drying the electrode slurry.

In an example embodiment, the thickness of the electrode active material layer may be in a range of about 10 µm to about 170 µm. For example, the thickness of the electrode active material layer may be 10 µm or more, 11 µm or more, 15 µm or more, 20 µm or more, 30 µm or more, or 40 µm or more. For example, the thickness of the electrode active material layer may be 170 µm or less, 160 µm or less, 150 µm or less, 140 µm or less, 130 µm or less, 120 µm or less, 110 µm or less, 100 µm or less, 90 µm or less, 80 µm or less, 70 µm or less, 60 µm or less, or 50 µm or less. When the thickness of the electrode active material layer satisfies the above-described range, the volume change of the battery during charge and discharge can be reduced or minimized, and a battery with a long lifetime can be provided.

Hereinafter, a method for manufacturing an electrode for the rechargeable lithium battery according to an example embodiment of the present disclosure is described in detail.

### Method for Manufacturing Electrode

Hereinafter, a method for manufacturing an electrode for the rechargeable lithium battery according to an example embodiment is described. Detailed descriptions of technical features overlapping with the technical features of the rechargeable lithium battery described above with reference to FIGS. 1 to 5 are omitted, and differences are described in detail.

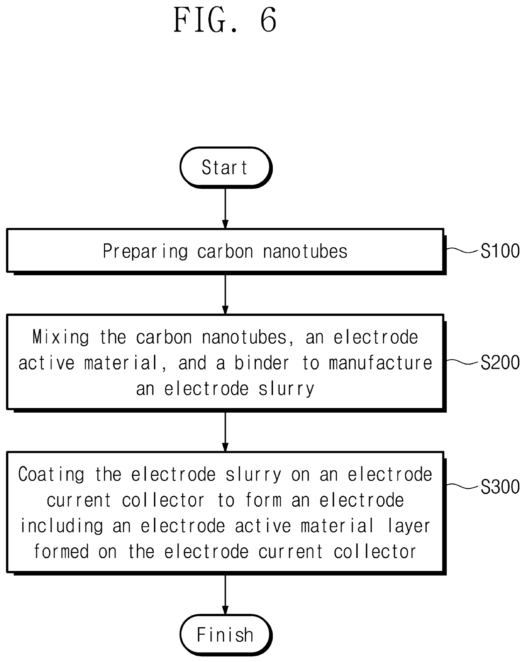

FIG. 6 is a flowchart illustrating a method for manufacturing an electrode for the rechargeable lithium battery according to example embodiments of the present disclosure.

Referring to FIG. 6, a method of manufacturing an electrode for the rechargeable lithium battery according to an example embodiment of the present disclosure may include preparing carbon nanotubes (S100); mixing the carbon nanotubes, an electrode active material, and a binder to manufacture an electrode slurry (S200); and coating the electrode slurry on an electrode current collector to form an electrode including an electrode active material layer formed on the electrode current collector (S300).

First, physical properties of the carbon nanotubes may be measured, and then carbon nanotubes with measured data values satisfying desired criteria may be selected (S100).

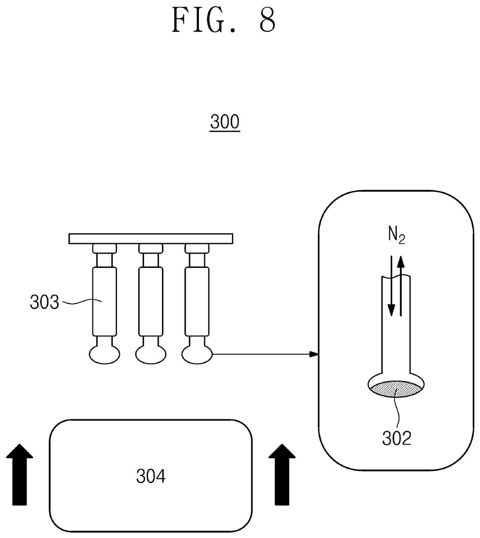

A more detailed description of the methods for measuring the carbon nanotubes and their physical properties is provided below with reference to FIGS. 8 to 9.

According to an example embodiment of the present disclosure, the carbon nanotubes may have a measurement value from a mesopore diameter distribution measured by the BJH (Barrett-Joyner-Halenda) method that satisfies a desired criterion.

According to an example embodiment, the carbon nanotubes may have a mesopore diameter distribution in the range of about 1.7 nm to about 300 nm as measured by the (BJH) method, wherein a peak top mesopore diameter A in the distribution satisfies 30 nm ≤ A ≤ 40 nm; a full width at half maximum (FWHM) of the distribution in the range of about 40 nm to about 55 nm.

According to an example embodiment, a mesopore volume of the carbon nanotubes measured by the BJH method may be in a range of about 1.6 cm³/g to about 3.0 cm³/g.

According to an example embodiment, the specific surface area of the carbon nanotube may be in a range of about 180 m²/g to about 290 m²/g.

The carbon nanotubes may be or include any one of thiol-functionalized carbon nanotubes, single-walled carbon nanotubes (SWCNT), double-walled carbon nanotubes (DWCNT), or multi-walled carbon nanotubes (MWCNT).

As an example, an average diameter of the carbon nanotubes may be in a range of about 1 nm to about 500 nm, about 1 nm to about 100 nm, or about 1 nm to about 10 nm. As an example, an average length of the carbon nanotubes may be 100 µm or less, and may be about 0.1 µm to about 100 µm, about 0.1 µm to about 50 µm, about 0.1 µm to about 30 µm, or about 0.1 µm to about 10 µm.

Subsequently, the carbon nanotubes, the electrode active material, and the binder may be mixed to manufacture an electrode slurry (S200).

The carbon nanotubes may be manufactured as the conductive material dispersion and mixed with the electrode active material and the binder in the form of a dispersion. That is, the electrode slurry may be manufactured by mixing the conductive material dispersion including the carbon nanotubes with the electrode active material and the binder.

According to an example embodiment, the conductive material dispersion may include the carbon nanotubes, a solvent, and a dispersant. The conductive material dispersion is described in more detail below.

According to an example embodiment, the content of the carbon nanotubes may be in a range of about 0.01 wt% to about 5 wt%, about 0.05 wt% to about 5 wt%, about 0.1 wt% to about 2 wt%, or about 0.1 wt% to about 1.0 wt% relative to a total weight of the electrode active material, the carbon nanotubes, and the binder.

In the case where the electrode for the rechargeable lithium battery according to an example embodiment is a positive electrode, any material that may be used as a positive electrode active material of the rechargeable lithium battery may be used as the electrode active material.

For example, the positive electrode active material may be or include a compound capable of reversible intercalation and deintercalation of lithium (a lithiated intercalation compound). The positive electrode active material may include a lithium composite oxide represented by chemical formula 1 below.

Chemical Formula 1: Liₓ₄M¹_{y}M²_{z}M³_{1-y-z}O₂₋ₐXₐ.

In chemical formula 1, 0.5 ≤x4 ≤ 1.8, 0 ≤ a ≤ 0.05, 0<y ≤ 1, 0 ≤ z ≤ 1, and 0 ≤ y+z ≤ 1,
M^{1,} M² and M³ may each independently include one or more elements such as or including at least one of Ni, Co, Mn, Al, B, Ba, Ca, Ce, Cr, Fe, Mo, Nb, Si, Sr, Mg, Ti, V, W, Zr or La, and combinations thereof, and
X may include one or more elements such as or including at least one of F, S, P, or Cl.

For example, in the chemical formula 1, M¹ may be or include Ni, and 0.8 ≤ y ≤ 1, and 0 ≤ z ≤ 0.2.

The rechargeable lithium battery according to an example embodiment of the present disclosure may include a high-nickel-based positive electrode active material. For example, the positive electrode active material may be or include LMFP (LiFePO₄ , lithium manganese phosphate), NMX (NiMnO₂ , nickel manganese oxide), NCA (LiNiCoAlO₂ , lithium nickel cobalt aluminum oxide), or NCM (LiNiCoMnO₂ , lithium nickel cobalt manganese oxide).

In the case where the electrode for the rechargeable lithium battery according to an example embodiment of the present disclosure is a negative electrode, any material that may be used as the negative electrode active material for the rechargeable lithium battery may be used without limitation

The negative electrode active material may include at least one of materials capable of reversibly intercalating/de-intercalating lithium ions, lithium metal, lithium metal alloy, a material capable of being doped and de-doped with lithium, or transition metal oxides.

The material capable of reversibly intercalating/de-intercalating lithium ions may be or include a carbon-based negative electrode active material, and may include, for example, crystalline carbon, amorphous carbon, or a combination thereof. Examples of the crystalline carbon may include amorphous, plate-like, flake-like, spherical, or fibrous graphite such as natural graphite or artificial graphite. Examples of the amorphous carbon may be or include at least one of soft carbon, hard carbon, mesophase pitch carbide, calcined coke, or the like.

The lithium metal alloy may include an alloy of lithium and metal such as or including at least one of Na, K, Rb, Cs, Fr, Be, Mg, Ca, Sr, Si, Sb, Pb, In, Zn, Ba, Ra, Ge, Al, or Sn.

The material capable of being doped and de-doped with lithium may include a Si-based negative electrode active material or a Sn-based negative electrode active material. The Si-based negative electrode active material may include at least one of silicon, silicon-carbon composite, SiOₓ (where 0<x ≤ 2), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be provided between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer on a surface of the core.

The Si-based negative electrode active material or the Sn-based negative electrode active material may be used in combination with a carbon-based negative electrode active material.

According to an example embodiment, the content of the electrode active material may be in a range of about 90.0 wt% to about 99.5 wt% relative to a total weight of the electrode active material, the carbon nanotube, and the binder.

The binder may adhere the electrode active material particles to each other, and may adhere the electrode active material to the electrode current collector. For example, the binder may include at least one of a polyvinylidene fluoride-based binder, a rubber-based binder, an acrylate-based binder, a polyvinyl pyrrolidone-based binder, an acetate-based binder, polyvinyl alcohol-based binder, a cellulose-based binder, or a combination thereof, but is not limited thereto.

For example, the polyvinylidene fluoride-based binder may be or include at least one of polyvinylidene fluoride, polyvinylidene fluoride-co-hexafluoropropylene, polyvinylidene fluoride-co-trichloroethylene (PVdF), polyvinylidene fluoride-co-tetrafluoroethylene, polyvinylidene fluoride-co-trifluoroethylene, polyvinylidene fluoride-co-trifluorochloroethylene, or polyvinylidene fluoride-co-trichloroethylene.

For example, the rubber-based binder may be or include at least one of styrene-butadiene rubber (SBR), nitrile-butadiene Rubber (NBR), hydrogenated nitrile butadiene rubber (HNBR), or ethylene propylene diene monomer rubber (EPDM).

For example, the acrylate-based binder may be or include at least one of polyacrylic acid (PAA), polymethylmethacrylate, polyisobutylmethacrylate, polyethylacrylate, polybutyl acrylate, or poly(2-ethylhexyl acrylate).

For example, the polyvinyl pyrrolidone-based binder may be or include polyvinyl pyrrolidone.

For example, the acetate-based binder may be or include at least one of polyvinyl acetate, polyethylene-co-vinyl acetate, cellulose acetate, cellulose acetate butyrate, or cellulose acetate propionate.

For example, the polyvinyl alcohol-based binder may be or include polyvinyl alcohol.

For example, the cellulose-based binder may be or include at least one of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum.

According to an example embodiment, the content of the binder may be in a range of about 0.1 wt% to about 5 wt% relative to a total weight of the electrode active material, the carbon nanotube, and the binder. When the content of the binder satisfies the above range, the electrode slurry has an appropriate adhesion and an appropriate viscosity, so that a coating adhesion and a dispersion stability can be improved.

The electrode slurry according to an example embodiment may further include a solvent for viscosity adjustment. The solvent contained in the electrode slurry may be or include a solvent generally used in the technical field of electrode slurries. For example, the solvent included in the electrode slurry may include at least one of dimethyl sulfoxide (DMSO), isopropyl alcohol, N-methyl pyrrolidone (NMP), acetone, water, or a combination thereof.

The electrode slurry may then be coated on the electrode current collector to form the electrode having the electrode active material layer thereon (S300).

Forming the electrode active material layer may include applying the electrode slurry onto the electrode current collector, followed by drying and rolling.

The electrode current collector may be or include any one or more of an aluminum foil, a copper foil, a nickel foil, a stainless-steel foil, a titanium foil, a nickel foam, a copper foam, a polymer substrate coated with a conductive metal, or a combination thereof.

The electrode manufactured by the manufacturing method according to an example embodiment of the present disclosure may have a low powder resistance. For example, the electrode according to the example embodiment may have a powder resistance of about 10 Ohm·cm or less.

The powder resistance of the electrode is described below.

In general, the measurement of powder resistance may evaluate the electrical properties of powders.

The powder resistance of the electrode according to an example embodiment may be measured using a powder resistance meter (manufacturer: Hantech, Korea, Model name: HPRM-FA2), and may be measured using a standard measurement method in accordance with ASTM D257.

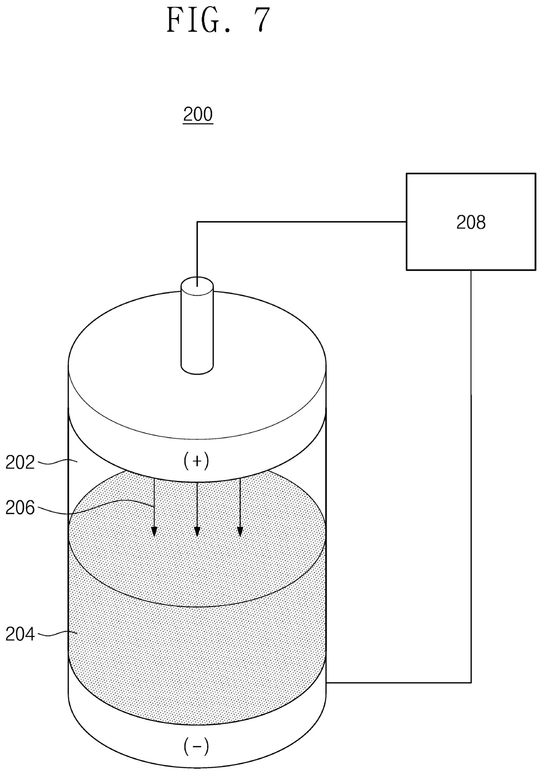

FIG. 7 is a diagram illustrating a method of measuring the powder resistance of a powder using a powder resistance meter 200.

Referring to FIG. 7, the size and shape of the container 202 for accommodating the powder 204 in the powder resistance meter 200 are not particularly limited. For example, the container 202 may have a cylindrical shape with a circular bottom surface. The powder resistance meter 200 may include a pressing member movable on one side of the upper portion of the container 202 to apply pressure, illustrated by arrows 206, to the powder 204 after the powder 204 is put into the container 202. The powder resistance is determined by a resistance measuring device 208 of the powder resistance meter 200.

In general, in order to actually measure the powder resistance of the electrode, it is necessary to manufacture an electrode slurry containing an electrode active material, a binder, and a conductive material dispersion, and then process the electrode slurry into an electrode active material powder form.

For example, the electrode active material powder may be manufactured by pulverizing the electrode active material layer into a powder form. For example, the electrode active material powder may be manufactured by mixing the electrode active material, the binder; and the conductive material dispersion containing the carbon nanotubes to form an electrode slurry, followed by drying and pulverizing the electrode slurry into a powder form. For this reason, the electrode active material powder may include the electrode active material; the binder; and the carbon nanotubes. In another example, the electrode active material powder may be obtained by detaching the electrode active material layer from a positive electrode and pulverizing the detached electrode active material layer.

According to an example embodiment, the powder resistance of the electrode may be measured by weighing the electrode active material powder, and then introducing a certain or desired amount of the electrode active material powder into a container of the powder resistance meter. The powder resistance of the electrode active material powder may be calculated while adjusting the pressure applied to the electrode active material powder.

For example, the rolling density may be measured by continuously applying a force to the electrode active material powder, during which the powder is compressed. The powder resistance at this time may be measured using a probe.

According to an example embodiment of the present disclosure, the powder resistance of the electrode active material powder, estimated by extrapolation at a rolling density in a range of about 3.0 g/cc to about 5.0 g/cc, may be about 10 Ohm·cm or less, 9.5 Ohm·cm or less, or 9 Ohm·cm or less. For example, the powder resistance of the electrode may be in a range about 1 Ohm·cm to about 10 Ohm·cm, about 6 Ohm·cm to about 9 Ohm·cm, or about 7 Ohm·cm to about 9 Ohm·cm at a rolling density in a range of about 3.0 g/cc to about 5.0 g/cc.

When the powder resistance of the electrode is within the above-described range, the electrical conductivity within the electrode may be desired or improved.

The powder resistance of the electrode may be based on the electrode active material powder in which the content of carbon nanotube is in a range of about 0.1 wt% to about 1.0 wt%, relative to the total weight of the electrode active material powder. According to an example embodiment, the powder resistance of the electrode may be based on the electrode active material powder in which the content of the carbon nanotube is equal to about 0.5 wt%, relative to the total weight of the electrode active material powder.

Measuring the powder resistance of the electrode as described above requires significant time and incurs costs. Therefore, there is a need for the development of a method that allows for the evaluation of the resistance and electrical conductivity within the electrode through a relatively simple approach, without actually manufacturing the electrode slurry.

Examples of the present disclosure describe a method for readily evaluating the conductivity of the carbon nanotube within the electrode by utilizing the specific surface area value of the carbon nanotube, which may be measured relatively simply, and a mesopore diameter distribution graph measured by the BJH method.

That is, examples of the present disclosure may enable the prediction of the performance of the carbon nanotube within the electrode without directly manufacturing a conductive material dispersion or the electrode slurry, by using the carbon nanotube which data values measured by the BJH method satisfy a desired criteria.

Hereinafter, the carbon nanotube according to an example embodiment of the present disclosure is described in detail.

### Carbon nanotube

The carbon nanotube is composed of or include carbon atoms that are connected through strong covalent bonds, giving the carbon nanotube high tensile strength, desired or improved flexibility and elasticity, and outstanding chemical stability. Due to these properties, the carbon nanotubes have high applicability in the fields of electronic materials, energy materials, and various other fields. For example, the carbon nanotubes can be used as a conductive material in the electrode for the rechargeable lithium battery.

The type of the carbon nanotube may include any one or more of thiol-functionalized carbon nanotubes, single-walled carbon nanotubes (SWCNT), double-walled carbon nanotubes (DWCNT), or multi-walled carbon nanotubes (MWCNT).

The carbon nanotubes may have an average diameter in the nanometer range, and an average length in the micrometer range. The diameter of the carbon nanotubes means the length of a minor axis perpendicular to the major axis.

As an example, the average diameter of the carbon nanotubes may be in a range of about 1 nm to about 500 nm, about 1 nm to about 100 nm, or about 1 nm to about 10 nm. When the average diameter of the carbon nanotubes satisfies the above range, the carbon nanotubes can impart conductivity to a large surface area with a small amount of material.

For example, the average length of the carbon nanotubes may be in a range of about 0.1 µm to about 100 µm, about 0.1 µm to about 50 µm, about 0.1 µm to about 30 µm, or about 0.1 µm to about 10 µm. When the average length of the carbon nanotubes satisfies the above range, an appropriate conductivity may be exhibited, and a desired or improved ion conductivity may be obtained at the time of producing the electrode.

The carbon nanotubes according to an example embodiment of the present disclosure may satisfy a specific range of values in a mesopore diameter distribution measured by the BJH method.

The BJH method is a representative method used for analyzing the pore structure of a porous material. The BJH method can measure the diameter and volume of mesopore of a porous material based on adsorption-desorption of a gas. In the present disclosure, the "mesopore" means a pore having a size in a range of about 1.7 nm to about 300 nm in the porous material.

A device used for the BJH method is mainly used as a "specific surface area and pore characterization measurement meter" capable of measuring a nitrogen adsorption-desorption isotherm. The specific surface area and pore characterization measurement meter can measure the surface area, the pore size distribution, the total pore volume, and the like of the sample. As an example, in the present disclosure, the "specific surface area and pore characterization measurement meter" may be an ASAP 2020 (manufacturer: Micromeritics), but is not limited thereto.

The mesopore diameter distribution of the carbon nanotubes according to the present disclosure may be measured using the BJH method, which provides results based on the nitrogen adsorption-desorption data.

FIG. 8 is a schematic conceptual diagram of the device 300 for measuring the pore distribution and the specific surface area of the carbon nanotubes.

First, the carbon nanotube sample 302 may be subjected to a pretreatment process in which the sample 302 is dried by a heat treatment in a vacuum atmosphere prior to the measurement of the mesopore diameter distribution, but is not limited thereto. As an example, the carbon nanotube sample 302 may be subjected to a pretreatment process in which the sample 302 is treated at a high temperature (100 °C to 300 °C) in a vacuum atmosphere to remove water and impurities adsorbed on the surface.

Referring to FIG. 8, the pretreated sample 302 may be weighed, and the sample 302 may be exposed to liquid nitrogen to adsorb or desorb nitrogen into the pores of the sample at a low temperature (approximately -196°C).

Then, the relative pressure (P/Po) is gradually changed to collect data on the adsorption amount and the desorption amount of nitrogen, and an isotherm may be calculated from the collected data. Here, the relative pressure (P/Po) means a value obtained by dividing the pressure (P) of the adsorbed gas by the saturated vapor pressure (Po).

The mesopore diameter, the mesopore volume and the mesopore diameter distribution can then be calculated on the basis of the calculated isotherms by means of the data analysis software attached to the device.

For example, a pore size distribution of a sample may be measured using the surface area and pore characterization apparatus 300 according to a BJH (Barrrett-Joyner-Halenda) method. Specifically, the sample is mounted in an isothermal jacket 303 maintained at a predetermined temperature prior to analysis, and, during the analysis, the sample is maintained under an isothermal condition using an isothermal bath 304. Thereafter, nitrogen (N₂) is used as an analysis gas to perform adsorption and desorption with respect to a surface and internal pores of the sample (as indicated by arrows), and adsorption/desorption behavior thereof is measured. In particular, based on a nitrogen desorption isotherm obtained during the desorption process, a pore size distribution and a pore volume in a mesoporous region of the sample are calculated according to the BJH method by applying a Kelvin equation and condensation/evaporation behavior within pores. Through this method, pore structural characteristics of the sample may be quantitatively evaluated(see FIG. 8).

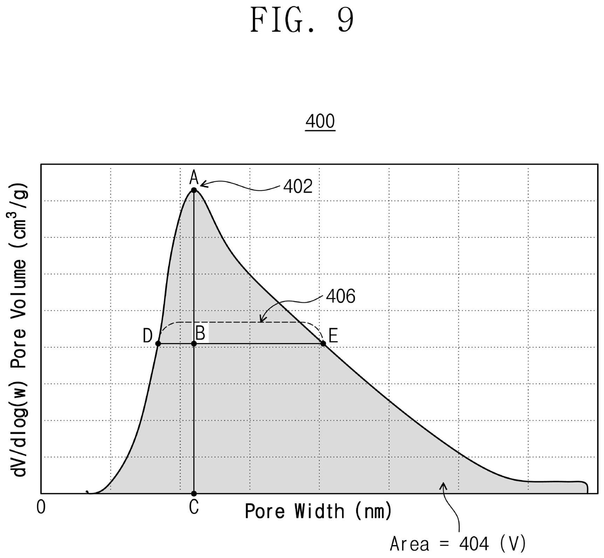

FIG. 9 shows a graph 400 of the mesopore diameter distribution measured by the BJH method.

Referring to FIG. 9, from the mesopore diameter distribution measured by the BJH method, the peak top mesopore diameter 402, the mesopore volume 404 (V), defined by the area under the graph 400, and the full width at half maximum (FWHM) 406 can be calculated.

In the mesopore diameter distribution 400 of about 1.7 nm to about 300 nm measured by the BJH method, the peak top mesopore diameter 402 can be represented as "A." That is, the peak top mesopore diameter 402 (A) refers to the mesopore diameter (nm) corresponding to the highest peak in the mesopore diameter distribution graph 400.

According to an example embodiment, the carbon nanotubes may have the mesopore diameter distribution 400 in the range of about 1.7 nm to about 300 nm, as measured by the BJH method. The peak top mesopore diameter 402 (A) in the distribution may satisfy 30 nm ≤ A ≤ 40 nm.

The mesopore diameter of the carbon nanotubes can constitute an indicator of the degree of pulverization of the carbon nanotube raw material, and can be used to evaluate whether the carbon nanotubes have agglomerated due to an excessive pulverization. Therefore, when the peak top mesopore diameter 402 (A) satisfies the above range, the aggregation of the carbon nanotubes can be reduced or suppressed, and the dispersibility of the carbon nanotubes in the dispersion can be improved.

Referring again to FIG. 9, the distribution density of the mesopore volume (dV/d log (W)) calculated using the BJH method represents how much pore volume is present in a specific pore diameter range. Here, V represents the cumulative mesopore volume, and W means the mesopore diameter.

A mesopore volume (V) means the sum of the distribution density of mesopore volume (dV/d log (W)). In the graph shown in FIG. 9, the larger the area 404, the larger the total mesopore volume, and the smaller the area 404, the smaller the total mesopore volume.

According to an example embodiment, the carbon nanotube may have the mesopore volume 404 (V) measured by the BJH method in a range of about 1.6 cm³/g to about 3.0 cm³/g.

The mesopore volume 404 (V) measured by the BJH method refers to the total volume of the pores present within the carbon nanotubes. When the mesopore volume 404 (V) is high, the porosity is increased, which may lead to an increase in the bulk resistivity during dispersion preparation, potentially reducing the dispersibility. When the mesopore volume 404 (V) satisfies the above-described range, the carbon nanotubes may have an appropriate porosity, thereby improving the dispersibility thereof within the dispersion.

The full width at half maximum 406 (FWHM) is the width of the curve at a height equal to about 50% of the peak top mesopore diameter 402 (A), which is the highest point in the mesopore size distribution curve 400 measured by the BJH method.

For example, when a perpendicular line is drawn from the peak top mesopore diameter 402 (A) to the horizontal axis, a line segment AC is formed. A horizontal line is then drawn at point B, which is the midpoint of line segment AC. The points where this horizontal line intersects the mesopore size distribution curve 400 are denoted as D and E, respectively. The FWHM 406 is defined as the length of line segment DE.

According to an example embodiment, the carbon nanotubes may have the FWHM 406 in the range of about 40 nm to about 55 nm, as measured by the BJH method.

When the FWHM 406 of the distribution measured by the BJH method of the carbon nanotubes satisfies the above range, the powder resistance of the electrode may be lowered.

The FWHM 406 measured by the BJH method may be an index that can confirm the degree of entanglement of the synthesized carbon nanotubes. When carbon nanotubes are synthesized, raw materials of the carbon nanotubes may agglomerate and become entangled.

Therefore, when the FWHM 406 measured by the BJH method satisfies the above-described range, the carbon nanotubes may be synthesized into carbon nanotubes having uniform intervals without entanglement between carbon nanotube raw materials.

When the FWHM 406 is less than the above-described range, it may mean that the mesopores are not sufficiently secured and the carbon nanotubes may be synthesized in a non-uniform form. That is, a low FWHM 406 may mean that the spacing between carbon nanotubes is narrow.

When the FWHM 406 exceeds the above-described range, it may indicate that the carbon nanotubes are synthesized in a non-uniform form with a wide distribution of mesopore diameters. In other words, a high full width at half maximum 406 (FWHM) may indicate that the spacing between the carbon nanotubes is non-uniform.

The present disclosure may improve the dispersibility of the carbon nanotubes contained in the dispersion by selecting carbon nanotubes in which pores may be uniformly formed, based on the FWHM 406 measured by the BJH method. Accordingly, the conductivity of the electrode may be further improved by using the dispersion containing carbon nanotubes satisfying the above-described conditions.

The specific surface area is a value indicating the surface area per unit mass of the carbon nanotubes. The specific surface area may be measured using the specific surface area and pore distribution measurement meter as described above. According to an example embodiment, the specific surface area may be measured by a standard Brunauer-Emmett-Teller (BET) method with a specific surface area measuring device (manufacturer: Micromeritics, Model name: ASAP 2020).

Hereinafter, the measurement of the specific surface area of the carbon nanotubes is described as follows.

First, the specific surface area measurement may include a pretreatment process at a temperature in a range of about 150° C to about 300° C under a vacuum atmosphere to remove contaminants and moisture from the surface of the carbon nanotube sample before performing the measurement, but this is not intended to be limiting.

Referring to FIG. 8, the pretreated carbon nanotube sample 302 may be cooled to a cryogenic temperature using liquid nitrogen in a vacuum atmosphere. Then, after inputting an analysis gas for adsorption such as nitrogen, pressure is equilibrated, the amount of gas adsorbed on the sample is measured, and the specific surface area can be calculated from the amount of adsorbed gas by a conventional BET method. That is, in the method for measuring the specific surface area of a carbon nanotube, the pretreated carbon nanotube sample can be cooled to a cryogenic temperature using liquid nitrogen in a vacuum atmosphere. Thereafter, an analysis gas for adsorption, such as nitrogen gas, is introduced, then the pressure is allowed to equilibrate, and the amount of gas adsorbed on the carbon nanotubes can be measured.

The higher specific surface area of the carbon nanotubes increases the contact area between the electrode active material and the conductive material, which improves the reaction efficiency. Therefore, the higher the measured value, the greater the conductivity within the electrode. That is, the specific surface area of the carbon nanotubes is proportional to the conductivity in the electrode.

The measured specific surface area of the carbon nanotubes may be less than or equal to about 500 m²/g. According to an example embodiment, the specific surface area of the carbon nanotubes may be in the range of about 180 m²/g to about 290 m²/g, about 190 m²/g to about 280 m²/g, about 200 m²/g to about 275 m²/g, or about 210 m²/g to about 260 m²/g. When the specific surface area of the carbon nanotubes is less than the above-described range, the contact area between the electrode active material and the conductive material decreases, the reaction efficiency decreases, and the internal resistance increases. When the specific surface area of the carbon nanotubes exceeds the above-described range, the aggregation of the carbon nanotubes increases, making it difficult to manufacture as a dispersion.

When manufacturing the electrode slurry, the carbon nanotubes may be mixed with a solvent and undergo homogenization process to form a dispersion, which is then mixed with the electrode slurry materials. Here, it may be challenging to produce a stable dispersion of the carbon nanotubes under specific conditions. Therefore, it may be advantageous to find the solvent or a concentration condition under which all the carbon nanotubes can be smoothly manufactured into the dispersion. In addition, in the actual manufacturing process, the dispersion containing carbon nanotubes requires considerable time and cost to evaluate their dispersibility.

In the present disclosure, the carbon nanotubes having a desired or improved dispersibility may be selected in a short time by utilizing their specific surface area that can be measured relatively simply, and data obtained from the BJH method.

When the dispersibility of the carbon nanotubes increases, the carbon nanotubes can form an electrical network within the electrode without agglomeration, thereby improving the electrical conductivity within the electrode.

### Conductive Material Dispersion

The conductive material dispersion for the rechargeable lithium battery according to an example embodiment may include a conductive material, a solvent, and a dispersant. The conductive material may impart conductivity to the electrode and may include carbon nanotubes.

The carbon nanotubes has the same configurations as the configurations of the carbon nanotubes described above with reference to FIGS. 1 to 9, and thus a detailed description thereof below is omitted.

According to an example embodiment, the content of carbon nanotubes may be in a range of about 0.05 wt% to about 5 wt%, or may be about 0.2 wt% to about 4 wt%, relative to the total weight of the conductive material dispersion. When the content of the carbon nanotubes falls within the above range, a conductive material dispersion with an appropriate viscosity can be obtained. When an electrode is manufactured using the conductive material dispersion, an electrode with desired or improved electrode characteristics may be manufactured.

The solvent included in the conductive material dispersion may include at least one of water, a polar organic solvent, or an alcohol. For example, the solvent may include at least one of N-methyl pyrrolidone (NMP), water, dimethylformamide, diethylformamide, dimethyl acetamide (DMAc), methanol, ethanol, 1-propanol, 2-propanol (isopropyl alcohol), 1-butanol (n-butanol), 2-methyl-1-propanol (isobutanol), 2-butanol (sec-butanol) 1-methyl-2-propanol (tert-butanol), pentanol, hexanol, heptanol or octanol.

The dispersant may include at least one of a hydrogenated nitrile butadiene rubber (HNBR), polyvinyl pyrrolidone, sodium dodecylbenzenesulfonate, or carboxymethylcellulose.

The dispersant may have a weight average molecular weight (Mw) in a range of about 200,000 g/mol to about 400,000 g/mol, about 100,000 g/mol to about 400000 g/mol, or about 100,000 g/mol to about 300,000 g/mol. Here, the "weight average molecular weight (Mw)" may be a value calculated by, e.g., gel filtration chromatography.

The content of the dispersant may be in a range of about 0.1 wt% to about 30 wt%, about 0.2 wt% to about 5 wt%, about 0.2 wt% to about 1 wt%, about 0.2 wt% to about 0.6 wt%, about 0.2 wt% to about 0.5 wt%, and about 0.2 wt% to about 0.4 wt% relative to the total weight of the conductive material dispersion.

Hereinafter, the present disclosure is described in more detail with reference to example embodiments. However, these example embodiments are merely illustrative of the present disclosure, and the scope of the present disclosure is not limited to these example embodiments.

### Experimental Example 1: Measurement of Mesopore Diameter Distribution and Specific Surface Area of Carbon Nanotube

First, seven types of the carbon nanotubes were prepared, each having an average length of 10 µm to 50 µm and an average diameter of 1 nm to 10 nm. The mesopore diameter distribution and the specific surface area of the seven types of the carbon nanotubes were measured. The mesopore diameter distribution and the specific surface area of the carbon nanotubes were measured using the methods described below.

### 1) Calculation of the mesopore diameter distribution by the BJH Method

First, to remove moisture from the carbon nanotubes, a pretreatment process was performed by drying 0.5 g of each of the seven types of the carbon nanotubes under a reduced pressure at 250 °C for 12 hours.

Using an ASAP 2020 device (manufacturer: Micromeritics), the mesopore diameter distribution graph of the carbon nanotubes after the pretreatment process was obtained.

The mesopore diameter and the pore volume of the carbon nanotubes were calculated using the BJH method. For example, the mesopore diameter and the pore volume of the carbon nanotubes were calculated based on the amount of nitrogen adsorbed and desorbed and isotherms observed in the mesopore region appearing within the relative pressure range (0<P/P₀<1) at a low temperature (approximately -196 °C).

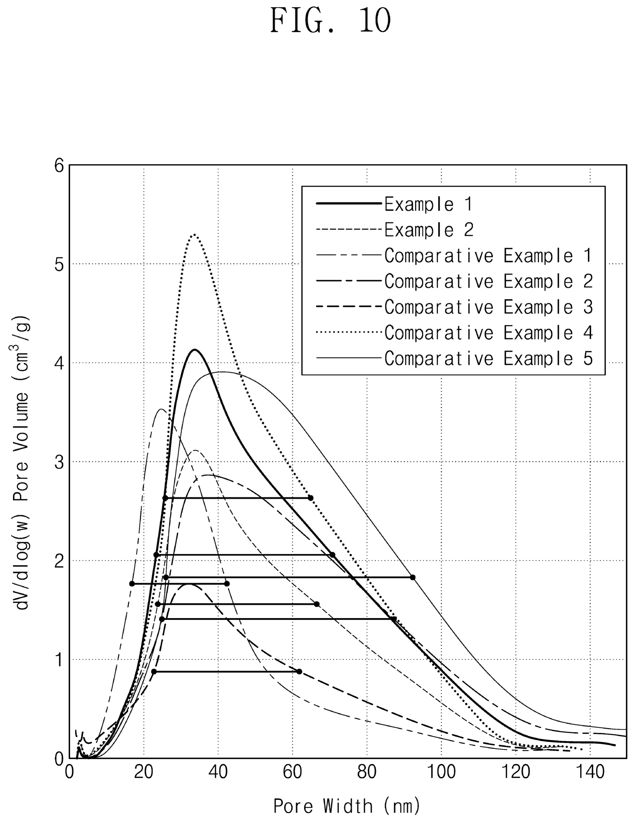

FIG. 10 is a graph 400 showing the mesopore diameter distribution 400 in the range of about 1.7 nm to about 300 nm for the carbon nanotubes, measured using the BJH method.

The peak top mesopore diameter, the full width at half maximum 406 (FWHM), and the mesopore volume shown in the graph of FIG. 10 were each calculated with reference to FIG. 9.

### 2) Calculation of the specific surface area

The specific surface area was measured using ASAP 2020 device (manufacturer: Micromeritics). Specifically, 0.5 g of each of the seven types of the carbon nanotubes was pretreated by heated to 250 °C. Afterward, the carbon nanotubes were cooled to a liquid nitrogen temperature, a nitrogen gas was adsorbed until saturation. Then, by heating the carbon nanotubes back to a room temperature, the amount of the desorbed gas was measured. Based on these results, the specific surface area was calculated using the standard Brunauer-Emmett-Teller (BET) method.

The measured peak top mesopore diameter, the full width at half maximum (FWHM), the mesopore volume, and the specific surface area are shown in Table 1 below.

After confirming the measured values, the carbon nanotubes satisfying all of the following conditions (A) to (D) were set as Examples, and the carbon nanotubes that did not satisfy all of the following conditions (A) to condition (D) was set as Comparative Examples.

### Examples Conditions:

The mesopore diameter distribution in the range of 1.7 nm to 300 nm as measured by the BJH method;
(A) the peak top mesopore diameter, "A" in the distribution satisfies 30 nm ≤ A ≤ 40 nm;
(B) the full width at half maximum (FWHM) of the distribution in the range of 40 nm to 55 nm;
(C) the mesopore volume satisfies 1.6 cm³/g to 3.0 cm³/g; and
(D) the specific surface area of the carbon nanotubes satisfies 180 m²/g to 290 m²/g.

**Table 1:**

| categorizatio n | Example 1 | Example 2 | Compara tive Example 1 | Compara tive Example 2 | Compara tive Example 3 | Compara tive Example 4 | Compara tive Example 5 |
|---|---|---|---|---|---|---|---|
| Peak Top Mesopore Diameter 402 (nm) | 33.1 | 33.1 | 24.3 | 33.7 | 31.5 | 33.0 | 39.6 |
| Mesopore Volume 404 (cm³/g) | 2.4 | 1.8 | 1.8 | 2.0 | 1.2 | 2.7 | 2.4 |
| FWHM 406 (nm) | 49.68 | 45.26 | 28.2 | 64.64 | 41.62 | 39.4 | 67.0 |
| Specific Surface Area (m²/g) | 255.5 | 212.1 | 297.9 | 263.1 | 1011.5 | 244.8 | 196.4 |

### Evaluation Example 1: Measurement of Powder Resistance of Electrode

### Manufacturing of Conductive Material Dispersion:

To determine the powder resistance of the electrode, the conductive material dispersions were manufactured by mixing each of the carbon nanotubes from the above Examples and Comparative Examples with an N-methyl pyrrolidone (NMP) solvent. Specifically, 3.0 wt% of the carbon nanotubes and 0.6 wt % of hydrogenated nitrile butadiene rubber (HNBR) were added to 96.4 wt% of N-methyl pyrrolidone (NMP) solvent, and the mixture was dispersed for 12 hours to manufacture the conductive material dispersion with a concentration of 3.6 wt%.

### Manufacturing of positive electrode slurry:

Then, a positive electrode slurry was manufactured by mixing a positive electrode active material (LiNi_{0.94} Co_{0.04 5}Al_{0.01 5}O₂ , D50: 13 µm), the conductive material dispersion, and a binder (polyvinylidene fluoride) in an N-methyl pyrrolidone (NMP) solvent. In the mixing process, the composition of the manufactured positive electrode slurry was adjusted such that the positive electrode active material is 98.0 wt%, the conductive material (carbon nanotube) is 0.5 wt%, and the binder is 1.5 wt%.

### Electrode active material powder:

A drying and pulverization process was performed on each of the prepared positive electrode slurries to obtain an electrode active material powder.

5.0 g of the obtained electrode active material powder was weighed, and the powder resistance was measured using the powder resistance meter (manufacturer: Hantech, Korea, Model name: HPRM-FA2) under conditions of a start range of -3 ohm and 10 V while applying pressure with a 4-pin probe. Based on the measured powder resistance data, the powder resistance at a rolling density of 3.6 g/cc was estimated by extrapolation. The derived powder resistance of the electrodes is shown in Table 2 below. In Table 2, "O" indicates that a dispersion can be prepared, and "X" indicates that a dispersion cannot be prepared.

**Table 2:**

| categori zation | Example 1 | Example 2 | Compar ative Example 1 | Compar ative Example 2 | Compar ative Example 3 | Compar ative Example 4 | Comparativ e Example 5 |
|---|---|---|---|---|---|---|---|
| Dispersi on Preparati on Availabi lity | O | O | O | O | X | O | O |
| Powder Resistan ce of Electrod e (Ohm·c m) | 8.4 | 9.6 | 13.4 | 13.8 | - | 14.4 | 15.3 |

Referring to Table 2, in the case of Comparative Example 3, using the carbon nanotubes with the large specific surface area, the surface energy of the carbon nanotubes increases, thereby reducing their dispersibility in the solvent. In addition, during the preparation of the dispersion, aggregation of the carbon nanotubes becomes more severe, forming agglomerates, which makes it challenging to achieve a uniform dispersion, and thus, it is difficult to use the agglomerates as a dispersion.

Also, the powder resistance of the electrode using the carbon nanotubes according to the example was measured to be 10 Ohm·cm or less. As a result, it can be confirmed that the electrode using the carbon nanotubes according to the example embodiments of the present disclosure has a lower powder resistance compared to the electrode using the carbon nanotubes of the comparative examples.

The carbon nanotubes according to the present disclosure may be screened for the carbon nanotubes exhibiting desired or improved electrical properties in the electrodes by utilizing the pore distribution characteristics and the specific surface area of the carbon nanotubes, which can be measured relatively readily.

The batteries using the carbon nanotubes according to example embodiments of the present disclosure may have better lifetime characteristics than the batteries using the carbon nanotubes according to the comparative examples.

According to examples of the present disclosure, by utilizing the pore distribution characteristics and the specific surface area of the carbon nanotubes, the lifetime characteristics of the rechargeable lithium battery can be reliably assessed in advance, without actually manufacturing the rechargeable lithium battery and testing the lifetime characteristics over a long period of time.

The present disclosure makes it possible to more readily and economically evaluate the performance of a battery by predicting the performance of the rechargeable lithium battery without making the rechargeable lithium battery.

The carbon nanotubes according to the present disclosure exhibit the pore characteristics, as measured by the BJH method, satisfying specific conditions. These characteristics influence the powder resistance, thereby enabling their use as conductive materials for the rechargeable lithium battery with improved dispersibility and conductivity.

The carbon nanotubes of the present disclosure can be selected as conductive materials with desired or improved electrical properties in the electrodes by utilizing readily measurable pore characteristics and the specific surface area.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

1. A carbon nanotube having:
a mesopore diameter distribution (400) in a range of 1.7 nm to 300 nm as measured by a Barrett-Joyner-Halenda, abbreviated BJH method, wherein a peak top mesopore diameter (402) "A" in the distribution satisfies 30 nm ≤ A ≤ 40 nm;
a full width at half maximum (406)of the distribution (400) in the range of 40 nm to 55 nm; and
a specific surface area of 500 m²/g or less as measured by a Brunauer-Emmett-Teller, abbreviated BET method.

2. The carbon nanotube of claim 1, wherein a mesopore volume (404) measured by the BJH method is in a range of 1.6 cm³/g to 3.0 cm³/g.

3. The carbon nanotube according to any of the preceding claims, wherein the specific surface area is in a range of 180 m²/g to 290 m²/g.

4. The carbon nanotube according to any of the preceding claims,
wherein the carbon nanotube comprises at least one of thiol-functionalized carbon nanotubes, single-walled carbon nanotubes (SWCNT), double-walled carbon nanotubes (DWCNT), and multi-walled carbon nanotubes (MWCNT).

5. The carbon nanotube according to any of the preceding claims, wherein an average diameter of the carbon nanotube is in a range of 1 nm to 100 nm.

6. The carbon nanotube according to any of the preceding claims, wherein an average length of the carbon nanotube is in a range of 0.1 µm to 10 µm.

7. A conductive material dispersion for a rechargeable lithium battery, the conductive material dispersion comprising:
the carbon nanotube according to any of claims 1 to 6;
a dispersant; and
a solvent.

8. The conductive material dispersion of claim 7, wherein a content of the carbon nanotube is in a range of 0.05 wt% to 5 wt% relative to a total weight of the conductive material dispersion.

9. The conductive material dispersion according to any of claims 7 or 8, wherein the solvent comprises at least one of N-methyl pyrrolidone (NMP), water, dimethylformamide, diethylformamide, dimethyl acetamide (DMAc), methanol, ethanol, 1-propanol, 2-propanol (isopropyl alcohol), 1-butanol (n-butanol), 2-methyl-1-propanol (isobutanol), 2-butanol (sec-butanol) 1-methyl-2-propanol (tert-butanol), pentanol, hexanol, heptanol, and octanol.

10. The conductive material dispersion according to any of claims 7 to 9,
wherein the dispersant comprises at least one of a hydrogenated nitrile butadiene rubber (HNBR), polyvinyl pyrrolidone, sodium dodecylbenzenesulfonate, and carboxymethylcellulose,
wherein a content of the dispersant is in a range of 0.1 wt% to 30% relative to a total weight of the conductive material dispersion.

11. The conductive material dispersion according to any of claims 7 to 10, wherein a weight average molecular weight of the dispersant is in a range of 200,000 g/mol to 400,000 g/mol, the weight average molecular weight being determined by gel filtration chromatography.

12. A method for manufacturing an electrode for a rechargeable lithium battery, the method comprising:
preparing a carbon nanotube;
mixing the carbon nanotube, an electrode active material, and a binder to manufacture an electrode slurry; and
coating the electrode slurry on an electrode current collector to form an electrode including an electrode active material layer formed on the electrode current collector,
wherein the carbon nanotube is configured according to any of claims 1 to 6.

13. The method of claim 12,
wherein the carbon nanotube is prepared as a conductive material dispersion and mixed with the electrode active material and the binder, and
wherein forming the conductive material dispersion comprises mixing the carbon nanotube, a dispersant, and a solvent.

14. The method of claims 12 or 13, wherein a powder resistance of the electrode at a rolling density in a range of 3.0 g/cc to 5.0 g/cc is in a range of 1 Ohm·cm to 10 Ohm·cm, determined according to ASTM D257; and/or wherein the powder resistance of the electrode is measured by applying pressure to an electrode active material powder, the electrode active material powder being manufactured by pulverizing the electrode active material layer into a powder form,
wherein the electrode active material powder comprises:
the electrode active material;
the binder; and
the carbon nanotube, and
wherein a content of the carbon nanotube is in a range of 0.1 wt% to 1.0 wt% relative to a total weight of the electrode active material powder.

15. Use of a carbon nanotube configured according to any of claims 1 to 6 in an electrode for a rechargeable lithium battery.
